Europäisches Patentamt

European Patent Office

Office européen des brevets

(11) Veröffentlichungsnummer: **0 257 491**
**A1**

(12) **EUROPÄISCHE PATENTANMELDUNG**

(21) Anmeldenummer: **87111834.5**

(22) Anmeldetag: **14.08.87**

(51) Int. Cl.⁴: **G02B 6/38** , H01R 13/58

(30) Priorität: **18.08.86 DE 8622121 U**

(43) Veröffentlichungstag der Anmeldung:
**02.03.88 Patentblatt 88/09**

(84) Benannte Vertragsstaaten:
**AT BE CH DE ES FR GB GR IT LI LU NL SE**

(71) Anmelder: **Siemens Aktiengesellschaft Berlin
und München**
**Wittelsbacherplatz 2**
**D-8000 München 2(DE)**

(72) Erfinder: **Pohl, Peter, Dipl.-Ing.**
**Ganghoferstrasse 15**
**D-8035 Stockdorf(DE)**

(54) **Vorrichtung zur Fixierung von faserförmigen Lichtwellenleitern in einem Steckergehäuse.**

(57) Die Vorrichtung zum Fixieren von faserförmigen Lichtwellenleitern (4) besteht aus einem in eine Durchtrittsöffnung (7) eingesetzten Fixierteil (1) aus elastisch deformierbarem Material, in welchem mindestens ein Lichtwellenleiter (4) in jeweils einem Kanal (5) lose verschiebbar ist, bis ein Pfropfen (2)in eine parallel zur Verlaufsrichtung der Lichtwellenleiter angeordnete Ausnehmung im Bereich des Fixierteils eingeschoben wird, wodurch das Fixierteil elastisch deformiert und der mindestens eine Lichtwellenleiter fixiert wird.

FIG 1

## Vorrichtung zur Fixierung von faserförmigen Lichtwellenleitern in einem Steckergehäuse

Die Erfindung bezieht sich auf eine Vorrichtung zum Fixieren von faserförmigen Lichtwellenleitern in einem Steckergehäuse, welches eine Durchtrittsöffnung zum Hindurchführen von mindestens einem Lichtwellenleiter besitzt.

Es sind schon verschiedene derartige Vorrichtungen bekannt. Beispielsweise sehen diese ein Einkleben der Lichtwellenleiter in das Gehäuse vor. Dabei sind relativ lange Aushärtezeiten erforderlich.

Aufgabe der Neuerung ist es daher, eine Vorrichtung der eingangs genannten Art zu schaffen, die demgegenüber unkomplizierter gehandhabt werden kann.

Die erfindungsgemäße Lösung dieser Aufgabe sieht vor, daß

a) ein Fixierteil aus elastisch deformierbarem Material vorgesehen ist, das auf dem wenigstens einen Lichtwellenleiter verschiebbar ist;

b) das Fixierteil im wesentlichen spannungsfrei in die Durchtrittsöffnung eingesetzt ist;

c) im Bereich des Fixierteils, parallel zur Verlaufsrichtung des wenigstens einen Lichtwellenleiters eine Ausnehmung vorgesehen ist;

d) in die Ausnehmung ein aus im wesentlichen unelastischem Material bestehender Pfropfen unter elastischer Deformierung des Fixierteils eingedrückt ist.

Auf diese Weise wird der Lichtwellenleiter vorteilhaft erst in der Durchtrittsöffnung mit dem Fixierteil kraftschlüssig verbunden. Die Verbindung zwischen Fixierteil und Durchtrittsöffnung erfolgt ebenfalls erst durch Eindrücken des Pfropfens.

Dabei sieht eine zweckmäßige Ausführungsform vor, daß die Ausnehmung zwischen der Innenwandung der Durchtrittsöffnung und dem Fixierteil vorgesehen ist und daß das Fixierteil einen hantelartigen Durchbruch in Form von zwei zylindrischen, der Aufnahme von Lichtwellenleitern dienenden Kanälen, die über einen Querspalt miteinander verbunden sind, aufweist.

Diese Form gewährleistet eine in etwa gleichmäßige Verteilung der Fixierkraft auf den Umfang des Lichtwellenleiters.

In einer weiteren vorteilhaften Ausführungsform ist vorgesehen, daß die Ausnehmung zur Aufnahme des Pfropfens im Fixierteil vorgesehen ist und daß das Fixierteil wenigstens zwei Kanäle im Bereich zwischen Zentrum und Außenbegrenzung aufweist und einer dieser Kanäle die Ausnehmung für den Pfropfen bildet.

Durch geeignete Bemessung der Kanäle und/oder des Pfropfens ist dabei vorteilhaft eine wahlweise Verwendung der Kanäle zur Aufnahme der Lichtwellenleiter bzw. des Pfropfens möglich.

Bei einer speziellen Ausführungsform ist vorgesehen, daß die Ausnehmung zur Aufnahme des Pfropfens im Zentrum des Fixierteils vorgesehen ist.

Eine weitere zweckmäßige Ausführungsform sieht vor, daß das Fixierteil teilbar bzw. aufklappbar gestaltet ist.

Dadurch kann das Fixierteil an jeder beliebigen Stelle auf dem Lichtwellenleiter angebracht werden, beispielsweise, wenn kein freies Ende des faserförmigen Lichtwellenleiters vorhanden ist. Bei letzterer Ausführungform wird das Fixierteil nach dem Einschieben in die Durchtrittsöffnung daran gehindert sich wieder zu öffnen. Es verhält sich dann wie ein einteiliges Fixierteil.

Nachfolgend werden Ausführungsbeispiele der Neuerung anhand von vier Figuren noch näher erläutert. Dabei zeigen:

Fig. 1 ein in eine Durchtrittsöffnung eingesetztes Fixierteil für zwei Lichtwellenleiter, teilweise geschnitten,

Fig. 2 das Fixierteil aus Fig. 1 aufklappbar ausgebildet in perspektivischer Darstellung,

Fig. 3 und Fig. 4 weitere Ausführungsformen eines Fixierteils.

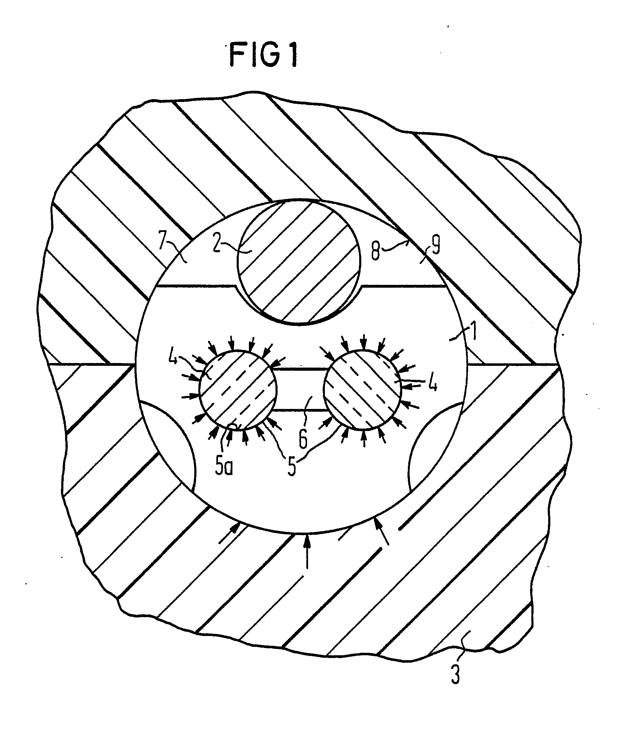

In Fig. 1 sind mit 7 eine Durchtrittsöffnung in einer Gehäusewand 3 z.B. eines Steckverbindergehäuses, mit 1 ein Fixierteil, mit 2 ein vorzugsweise sich konisch verjüngender Propfen und mit 4 zwei faserförmige Lichtwellenleiter, die von einer nicht dargestellten Kunststoffschicht umhüllt und in zwei Kanälen 5 geführt sind, bezeichnet.

Das vorzugsweise aus einem elastischen Kunststoff gefertigte Fixierteil 1, in dessen Kanälen 5 die beiden Lichtwellenleiter 4 lose verschiebbar sind, ist in die Durchtrittsöffnung 7 der Gehäusewand 3 eingesetzt. Die Lichtwellenleiter 4 sind dabei noch leicht beweglich, so daß der Lichtwellenleiter ohne einen für ihn schädlichen Kraftaufwand in seiner Längsrichtung justiert werden kann. Das Einsetzen des Fixierteils 1 in die Durchtrittsöffnung 7 kann entweder durch Einlegen des Fixierteils 1 in einen Teil der Durchtrittsöffnung 7 erfolgen, wenn, wie in Figur 1 gezeigt, im Bereich der Durchtrittsöffnung 7 eine geteilte Gehäusewand 3 vorhanden ist, oder durch ein axiales Einschieben des Fixierteils 1 in die Durchtrittsöffnung 7 vorgenommen werden, wenn eine einteilige Gehäusewand 3 vorliegt. Zwischen der Innenwandung 8 der Durchtrittsöffnung 7 und dem Fixierteil 1 ist eine Ausnehmung 9 vorgesehen, in welche der Pfropfen 2 parallel der Verlaufsrichtung der Lichtwellenleiter 4 eingeschoben wird. Der Pfropfen 2, welcher aus im wesentlich unelastischem Material besteht, ist so bemessen, daß beim Einschieben das aus elastischem Material bestehende Fixierteil 1 in einer Weise verformt wird, daß sich ein die Kanäle 5 verbindender Querschlitz 6 verringert und die Kanalinnenwandung 5a des Fixierteils 1 mit einer radial um den Lichtwellenleiter 4 verteilten Kraft auf den Lichtwellenleiter 4 drückt. Auf diese Weise erfolgt eine schnelle und sichere Befestigung der Lichtwellenleiter 4 mit definierten Kräften. Durch Entfernen des Pfropfens 2 werden die Lichtwellenleiter 4 wieder frei beweglich, beispielsweise wenn es notwendig ist, die Länge des freien Endes noch einmal zu korrigieren.

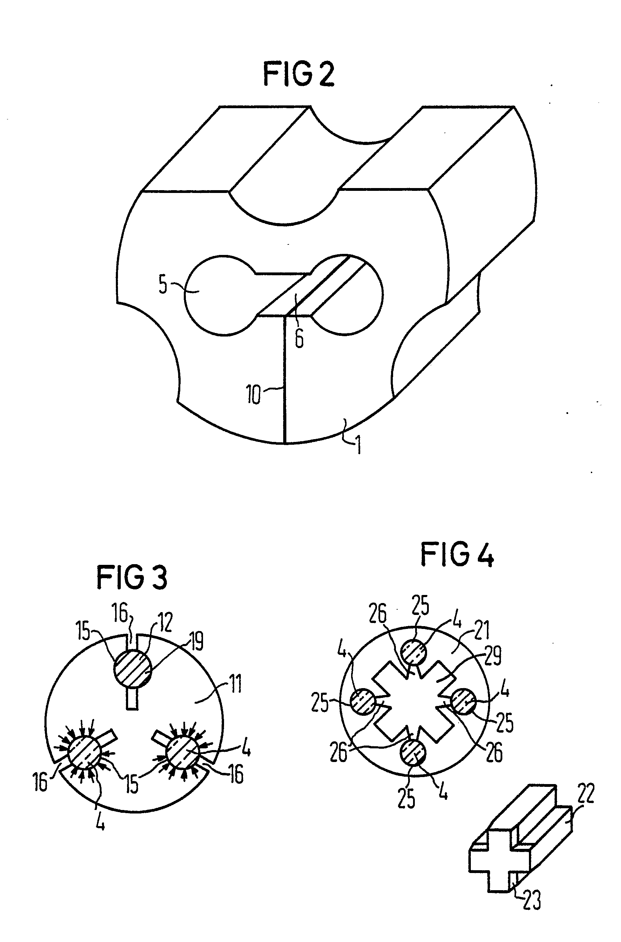

Wie Fig. 2 zeigt, besitzt das Fixierteil 1 eine Trennfuge 10. Diese Trennfuge 10 erlaubt ein Aufklappen des Fixierteils 1, wodurch die beiden Lichtwellenleiter 4 nicht mehr mit einem ihrer Enden durch die Kanäle 5 gefädelt werden müssen, und somit das Fixierteil an jeder beliebigen Stelle über die Lichtwellenleiter geklappt werden kann. Auf diese Weise ist vorteilhaft das Anbringen des Fixierteils auf einen Lichtwellenleiter auch nach dem Konfektionieren der Enden mit Steckverbindungs-oder sonstigen Elementen möglich.

In Fig. 3 sieht man ein Fixierteil 11, das eine Durchtrittsöffnung im wesentlichen ausfüllt. Dieses Fixierteil hat drei im 120° Winkel zueinander versetzt angeordnete Kanäle 15, die jeweils durch einen Schlitz 16 erweitert sind. Jeder Schlitz 16 erstreckt sich von einem zentrumsnahen Schlitzende zur Peripherie des Fixierteils und teilt dadurch das Fixierteil in drei Segmente auf,die lediglich im Zentrum zusammenhängen. Wahlweise zwei dieser Kanäle 15 können jeweils einen Lichtwellenleiter aufnehmen. In die durch den dritten Kanal 15 gebildete Ausnehmung 19 wird der Pfropfen 12 eingeschoben. Dadurch weitet sich der Schlitz 16 des als Ausnehmung 19 verwendeten Kanals 15, was zu einer Verengung der beiden restlichen Schlitze 16 führt. Die Lichtwellenleiter 4 werden dadurch fixiert.

In Fig. 4 ist ein eine Durchtrittsöffnung im wesentlichen ausfüllendes Fixierteil 21 zur Aufnahme von vier Lichtwellenleitern 4 dargestellt. Hierbei sind vier Kanäle 25, welche durch jeweils einen Schlitz 26 einseitig erweitert sind, in einem Winkel von 90° zueinander versetzt angeordnet. Die Schlitze 26 führen in eine zentrale kreuzförmige Ausnehmung 29. Ein Pfropfen 22 mit ebenfalls kreuzförmigem Profil wird in die Ausnehmung 29 eingeschoben. Zur Erleichterung des Einschiebens besitzt der Pfropfen 22 einen sich konisch verjüngenden Einführbereich 23. Dadurch werden die Schlitze 26 verengt, wodurch die Lichtwellenleiter 24 in den Kanälen fixiert sind.

**Ansprüche**

1. Vorrichtung zum Fixieren von faserförmigen Lichtwellenleitern in einem Steckergehäuse, welches eine Durchtrittsöffnung zum Hindurchführen von mindestens einem Lichtwellenleiter besitzt, **dadurch gekennzeichnet,** daß

a) ein Fixierteil aus elastisch deformierbarem Material vorgesehen ist, das auf dem wenigstens einen Lichtwellenleiter verschiebbar ist;

b) das Fixierteil im wesentlichen spannungsfrei in die Durchtrittsöffnung eingesetzt ist;

c) im Bereich des Fixierteils, parallel zur Verlaufsrichtung des wenigstens einen Lichtwellenleiters eine Ausnehmung vorgesehen ist;

d) in die Ausnehmung ein aus im wesentlichen unelastischem Material bestehender Pfropfen unter elastischer Deformierung des Fixierteils eingedrückt ist.

2. Vorrichtung nach Anspruch 1, **dadurch gekennzeichnet,** daß die Ausnehmung zwischen der Innenwandung der Durchtrittsöffnung und dem Fixierteil vorgesehen ist.

3. Vorrichtung nach Anspruch 2, **dadurch gekennzeichnet,** daß das Fixierteil einen hantelartigen Durchbruch in Form von zwei zylindrischen, der Aufnahme von Lichtwellenleitern dienenden Kanälen, die über einen Querspalt miteinander verbunden sind, aufweist.

4. Vorrichtung nach Anspruch 1, **dadurch gekennzeichnet,** daß die Ausnehmung zur Aufnahme des Pfropfens im Fixierteil vorgesehen ist.

5. Vorrichtung nach Anspruch 4, **dadurch gekennzeichnet,** daß das Fixierteil wenigstens zwei Kanäle im Bereich zwischen Zentrum und Außenbegrenzung aufweist und einer dieser Kanäle die Ausnehmung für den Pfropfen bildet.

6. Vorrichtung nach Anspruch 4, **dadurch gekennzeichnet,** daß die Ausnehmung zur Aufnahme des Pfropfens im Zentrum des Fixierteils vorgesehen ist.

7. Vorrichtung nach Anspruch 1, **dadurch gekennzeichnet,** daß das Fixierteil teilbar bzw. aufklappbar gestaltet ist.

# FIG 1

## FIG 2

## FIG 3

## FIG 4

## EINSCHLÄGIGE DOKUMENTE

| Kategorie | Kennzeichnung des Dokuments mit Angabe, soweit erforderlich der maßgeblichen Teile | Betrifft Anspruch | KLASSIFIKATION DER ANMELDUNG (Int. Cl.3) |
|---|---|---|---|
| Y | EP-A-0 043 421 (FELTEN & GUILLEAUME) <br> * Kurzfassung; Abbildungen 1, 2; Ansprüche 1, 4; Seite 3, letzter Absatz - Seite 4, Zeile 12 * <br> --- | 1,2,7 | G 02 B 6/38 <br> H 01 R 13/58 |
| Y | DE-U-7 935 570 (FELTEN & GUILLEAUME) <br> * Abbildungen 1-4; Ansprüche 1, 8; Seite 4, letzter Absatz - Seite 5, Zeile 6 * <br> --- | 1,2,7 | |
| A | EP-A-0 056 196 (AMP INC.) <br> * Kurzfassung; Abbildung 5 * <br> --- | 1 | |
| A | DE-A-2 754 347 (LICENTIA) <br> * Seite 5, Absatz 2 - Seite 6, Absatz 1; Abbildungen * <br> ----- | 1 | |

RECHERCHIERTE
SACHGEBIETE (Int. Cl.3)

G 02 B 6/00
G 02 B 7/00
H 01 R 13/00

Der vorliegende Recherchenbericht wurde für alle Patentansprüche erstellt

| Recherchenort | Abschlußdatum der Recherche | Prüfer |
|---|---|---|
| BERLIN | 17-11-1987 | HYLLA W.A. |